# EUROPÄISCHE PATENTSCHRIFT

(11) **EP 3 536 155 B1**
(45) Veröffentlichungstag und Bekanntmachung des Hinweises auf die Patenterteilung: **11.05.2022**
(21) Anmeldenummer: 19159159.3
(22) Anmeldetag: 25.02.2019
(51) Int. Cl.: A22C 9/00, B01F 29/60, B01F 35/90

(54) **TUMBLER UND BETRIEBSVERFAHREN HIERFÜR**
TUMBLER AND OPERATING METHOD FOR THE SAME
TAMBOUR ROTATIF ET SON PROCÉDÉ DE FONCTIONNEMENT

(30) Priorität: 07.03.2018 DE 102018105266
(43) Veröffentlichungstag der Anmeldung: 11.09.2019
(73) Patentinhaber: Ferdinand Henneken GmbH, 33181 Bad Wünnenberg (DE)
(72) Erfinder: Henneken, Kai, 33181 Bad Wünnenberg (DE); Henneken, Volker Ferdinand, 33181 Bad Wünnenberg (DE)
(74) Vertreter: Wickord, Wiro

(56) Entgegenhaltungen:
- CN-U- 206 760 615
- DE-A1- 19 963 881
- DE-U1- 9 314 582
- US-A- 4 994 294
- US-A- 5 972 398

## Beschreibung

Die Erfindung betrifft einen Tumbler mit einem um eine Drehachse rotierenden Behälter, welcher mantelseitig einen Fluidkanal für ein Fluid aufweist, und mit einer Drehdurchführung, über die das Fluid dem Behälter zugeführt wird, sowie ein Betriebsverfahren hierfür. Mittels des Tumblers werden Lebensmittel, insbesondere Fleischprodukte bearbeitet.

Tumbler werden heute für die mechanische Bearbeitung von Fleischprodukten verwendet. Üblicherweise umfasst der Tumbler einen zur Aufnahme der Lebensmittel ausgebildeten, im Betrieb um die Drehachse rotierenden Behälter (Trommel). Der Behälter sieht beispielsweise einen Doppelmantel vor mit dem Fluidkanal, welcher von einem temperierten Fluid durchströmt wird. Der Doppelmantel dient während des Betriebs des Tumblers dazu, die Lebensmittel bedarfsgerecht zu kühlen beziehungsweise zu erwärmen.

Die Lebensmittel werden heute über eine Befüll- und Entnahmeöffnung in den Behälter eingebracht. Die Befüll- und Entnahmeöffnung ist mittels einer Tür verschließbar und im Bereich einer ersten Stirnseite des Behälters vorgesehen. Die Zuführung des temperierten Fluids zu der rotierenden Trommel erfolgt über eine Drehdurchführung, welche beispielsweise koaxial zur Drehachse im Bereich einer der ersten Stirnseite des Behälters gegenüberliegenden zweiten Stirnseite vorgesehen ist.

Die DE 93 14 582 U1 gibt einen Tumbler an, bei dem die Lebensmittel kontinuierlich über eine Einlassvakuumschleuse eingeführt und über eine Auslassvakuumschleuse ausgeführt werden. Die Einlassvakuumschleuse und die Auslassvakuumschleuse sind hierbei jeweils als eine Zellenradschleuse ausgebildet.

Aufgabe der vorliegenden Erfindung ist es, einen Tumbler anzugeben, der sich besser in den Herstellungsprozess der Lebensmittel integrieren lässt. Ferner ist es Aufgabe der Erfindung, ein verbessertes Betriebsverfahren für einen Tumbler anzugeben.

Zur Lösung der Aufgabe weist die Erfindung die Merkmale des Patentanspruchs 1 auf. Demzufolge umfasst der Tumbler einen zur Aufnahme von Lebensmitteln ausgebildeten Behälter mit einem mantelseitig daran vorgesehenen Fluidkanal für ein Fluid, mit einer im Bereich einer ersten Stirnseite des Behälters vorgesehenen Entnahmeöffnung für die Lebensmittel, mit einer an einer der ersten Stirnseite gegenüberliegenden zweiten Stirnseite des Behälters vorgesehenen Zuführöffnung für die Lebensmittels und mit einer Absaugöffnung für ein in dem Behälter vorgesehenes Gas, insbesondere Luft. Weiter umfasst der Tumbler eine Antriebseinheit zum Rotieren des Behälters um die Drehachse sowie eine der zweiten Stirnseite und der Zuführöffnung zugeordnete Drehdurchführung. Die Drehdurchführung für den Tumbler umfasst ein Anschlussmodul und ein drehbar zu dem Anschlussmodul vorgesehenes Drehmodul, welches um die Drehachse rotierbar ist. Koaxial zu der Drehachse ist ein zu der Zuführöffnung des Behälters geführter erster Durchführungskanal für die Lebensmittel vorgesehen. Zudem ist ein zweiter Durchführungskanal als Vorlauf für das Fluid und ein dritter Durchführungskanal als Rücklauf für das Fluid gebildet. Der zweite Durchführungskanal umfasst eine an dem Anschlussmodul vorgesehene Zulauföffnung für das Fluid, einen zwischen dem Anschlussmodul und dem Drehmodul gebildeten Ringspalt, ein an dem Drehmodul gebildeten Zuleitungsabschnitt sowie eine zwischen dem Ringspalt und dem Zuleitungsabschnitt gebildete Verbindungsöffnung. Der dritte Durchführungskanal weist eine an dem Anschlussmodul vorgesehene Ablauföffnung für das Fluid, einen zwischen dem Anschlussmodul und dem Drehmodul gebildeten Ringspalt, einen an dem Drehmodul gebildeten Ableitungsabschnitt sowie eine zwischen dem Ringspalt und dem Ableitungsabschnitt gebildete Verbindungsöffnung auf. Zudem sind Dichtungen vorgesehen zum Dichten der Durchführungskanäle gegeneinander.

Der besondere Vorteil der Erfindung besteht darin, dass die Lebensmittel über die erste Stirnseite aus dem erfindungsgemäßen Tumbler entnommen werden und dass der erfindungsgemäße Tumbler über die zweite Stirnseite mit Lebensmitteln befüllt wird. Der Tumbler ist damit linienfähig und lässt sich besser in den Produktionsprozess integrieren. Dabei werden mittels der Drehdurchführung die Lebensmittel durch den ersten Durchführungskanal koaxial zur Drehachse in den Behälter zugeführt. Zugleich sieht die Drehdurchführung einen Vorlauf und einen Rücklauf für das Fluid vor. Es ist insofern möglich, die Lebensmittel und das Fluid über die gleiche Stirnseite und sogar gleichzeitig dem Tumbler zuzuführen. Die Lebensmittel werden dann nach der Bearbeitung in dem Behälter des Tumblers über die erste Stirnseite entnommen. Die Zuführung des Fluids kann dabei kontinuierlich erfolgen.

Insbesondere kann die Befüllung des Tumblers mittels einer sogenannten Vakuumbeschickung erfolgen. Es wird hierbei über die Absaugöffnung Luft oder ein anderes Gas aus dem Behälter abgesaugt. Infolge der Absaugung des Gases aus dem Behälter werden die Lebensmittel über den ersten Durchführungskanal angesagt. Hierzu wird von dem ersten Durchführungskanal eine Ansaugleitung zu einem Vorratsbehältnis geführt, in dem die Lebensmittel bereitgestellt werden. Die Befüllung des Tumblers kann insofern sehr schnell erfolgen, so dass die Linienfähigkeit des erfindungsgemäßen Tumblers einher geht mit kurzen Prozesszyklen beziehungsweise kurzen Befüllzeiten.

Als Fluid kann über den zweiten Durchführungskanal und dem dritten Durchführungskanal eine Sole in den Doppelmantel des Behälters eingebracht werden. Das Drehmodul der Drehdurchführung kann drehfest mit dem Behälter des Tumblers verbunden sein, während das Anschlussmodul der Anbindung an die Peripheriegeräte dient. Insbesondere kann an dem Anschlussmodul neben der Zulauföffnung und der Ablauföffnung für das Fluid eine Durchtrittsöffnung für die Lebensmittel vorgesehen sein. An die Durchtrittsöffnung kann dann die Ansaugleitung angeschlossen sein, über die die Lebensmittel zugeführt beziehungsweise angesaugt werden.

Beispielsweise wird neben den Lebensmitteln über den ersten Durchführungskanal erwärmte Luft als weiteres Fluid in den Behälter des Tumblers eingebracht. Durch das Zuführen von erwärmter Luft kann insbesondere das Auftauen gefrorener Lebensmittel in dem Behälter begünstigt beziehungsweise beschleunigt werden. Die erwärmte Luft kann beispielsweise über die Absaugleitung aus dem Behälter austreten beziehungsweise abgefördert werden.

Nach einer bevorzugten Ausführungsform der Erfindung sind der Zuleitungsabschnitt des zweiten Durchführungskanals und der Ableitungsabschnitt des dritten Durchführungskanals halbschalenartig beziehungsweise ringsegmentförmig ausgebildet und in eine durch die Drehachse definierte Axialrichtung der Drehdurchführung langgestreckt. Beispielsweise können der Zuleitungsabschnitt des zweiten Durchführungskanals und der Ableitungsabschnitt des dritten Durchführungskanals den ersten Durchführungskanal mantelseitig umgreifen. Vorteilhaft wird hierdurch eine sehr kompakte Bauform bewirkt, die es ermöglicht, die Lebensmittel und das Fluid getrennt zu dem rotierenden Behälter des erfindungsgemäßen Tumblers zu führen.

Nach einer Weiterbildung der Erfindung umgreift das Anschlussmodul das Drehmodul mantelseitig. Vorteilhaft ergibt sich hierdurch eine besonders kompakte Bauform für die Drehdurchführung. Zugleich vereinfacht sich der Anschluss von Peripheriegeräten an das äußere Anschlussmodul.

Nach einer Weiterbildung der Erfindung umfasst das Drehmodul einen bevorzugt als ein Drehteil hergestellten Rotationskörper mit einer koaxial zu der Drehachse vorgesehenen Längsausnehmung und eine in die Längsausnehmung des Rotationskörpers eingesetzte Hülse. Der Zuleitungsabschnitt des zweiten Durchführungskanals und der Ableitungsabschnitt des dritten Durchführungskanals sind dann zwischen der Hülse und dem Rotationskörper gebildet. Der zweite Durchführungskanal und der dritte Durchführungskanal sind durch Stege voneinander getrennt, welche zwischen der Hülse und dem Rotationskörper vorgesehen sind und sich in die Axialrichtung erstrecken. Vorteilhaft ergibt sich durch das Einsetzen der Hülse in den Rotationskörper eine sehr kompakte Bauform. Es gelingt insofern, die Lebensmittel und das Fluid auf sehr engem Raum getrennt dem rotierenden Behälter des Tumblers zuzuführen.

Nach einer Weiterbildung der Erfindung begrenzt ein Innenmantel der Hülse den ersten Durchführungskanal. Die Hülse bildet insofern eine Trennwand zwischen dem ersten Durchführungskanal einerseits und dem zweiten und dritten Durchführungskanal andererseits. Ein Außenmantel der Hülse bildet eine Grenzfläche für den zweiten Durchführungskanal und den dritten Durchführungskanal.

Nach einer Weiterbildung der Erfindung ist ein mit dem Drehmodul drehfest verbundener Zwischenkörper vorgesehen, welcher das Drehmodul im Bereich der Ringspalte des zweiten Durchführungskanals und des dritten Durchführungskanals mantelseitig umgreift. An dem Zwischenkörper sind ein erster weiterer Ringspalt und eine erste weitere Verbindungsöffnung als Teil des zweiten Durchführungskanals sowie ein zweiter weiterer Ringspalt und zweite weitere Verbindungsöffnung als Teil des dritten Durchführungskanals für das Fluid vorgesehen. Insbesondere kann das Anschlussmodul über Drehlager und bevorzugt über Wälzlager gegen den Zwischenkörper abgestützt sein. Beispielsweise kann vorgesehen sein, dass zum Dichten der Durchführungskanäle gegeneinander vorgesehene Wellendichtungen zwischen dem Anschlussmodul einerseits und dem Zwischenkörper andererseits angeordnet sind. Vorteilhaft kann durch das Vorsehen des Zwischenkörpers und insbesondere das Abstützen des Anschlussmoduls gegen den Zwischenkörper sowie das Anlegen der Wellendichtungen gegen den Zwischenkörper das Drehmodul insgesamt und insbesondere der Rotationskörper des Drehmoduls gegen Verschleiß geschützt werden. Sofern es beispielsweise aufgrund der Relativbewegung im Bereich der Wellendichtungen zu einem Abrieb kommt, können die Wellendichtungen einerseits und der Zwischenkörper andererseits ausgetauscht werden. Der mit dem Behälter des Tumblers verbundene Rotationskörper des Drehmoduls muss jedoch nicht ausgetauscht werden mit der Folge, dass der Wartungsaufwand signifikant reduziert wird.

Zur Lösung der Aufgabe weist die Erfindung die Merkmale des Patentanspruchs 11 auf. Demzufolge wird aus einem zur Aufnahme und Bearbeitung von Lebensmitteln ausgebildeten und um eine zur Vertikalen geneigten Drehachse rotierbaren Behälter des Tumblers über eine Absaugleitung, die zu einer Absaugöffnung des Behälters geführt ist, Gas und bevorzugt Luft aus dem Behälter abgesaugt. Weiter werden infolge der Gasabsaugung die Lebensmittel über eine Ansaugleitung und einen an einer Drehdurchführung des Tumblers gebildeten ersten Durchführungskanal die Lebensmittel in den Behälter eingesaugt. Über die Drehdurchführung wird zudem ein Fluid durch einen mantelseitig an dem Behälter vorgesehenen Fluidkanal geführt. Die Drehdurchführung weist hierzu einen zweiten Durchführungskanal als Zulauf für das Fluid und einen dritten Durchführungskanal als Rücklauf für das Fluid auf. Die Lebensmittel werden über eine im Bereich einer ersten Stirnseite des Behälters vorgesehene Entnahmeöffnung aus dem Behälter vorgesehen. Die Zuführung der Lebensmittel erfolgt im Bereich einer der ersten Stirnseite gegenüberliegenden zweiten Stirnseite, der die Drehdurchführung mit den Durchführungskanälen zugeordnet ist.

Der besondere Vorteil der Erfindung besteht darin, dass die Lebensmittel dem Tumbler auf zwei gegenüberliegenden Stirnseiten des Behälters zugeführt beziehungsweise aus diesem abgeführt werden und zugleich eine mantelseitige Kühlung des Behälters über das Fluid erfolgen kann. Der Tumbler wird insofern linienfähig mit der Folge, dass die Integration des Tumblers in den gesamten Herstellungs- beziehungsweise Verarbeitungsprozess der Lebensmittel verbessert wird.

Zugleich kann die Befüllung des Behälters mit den Lebensmitteln durch die Ansaugung beziehungsweise Vakuumbeschickung sehr schnell erfolgen. Die Wirtschaftlichkeit des Betriebsverfahrens verbessert sich hierdurch weiter. Insbesondere kann nach der Erfindung vorgesehen sein, dass die Lebensmittel außerhalb des Tumblers in einem Vorratsbehältnis bereitgestellt und aus diesem abgesaugt werden.

Nach einer bevorzugten Ausführungsform der Erfindung wird der Behälter des Tumblers insbesondere mittels eines Antriebs um die Drehachse rotiert, während der Fluidkanal des Behälters von dem Fluid durchströmt wird und die Lebensmittel dem Behälter zugeführt oder aus ebendiesem abgeführt werden. Vorteilhaft kann die Zykluszeit bei der Bearbeitung der Lebensmittel durch die gleichzeitige Zuführung beziehungsweise Absaugung der Lebensmittel einerseits und die Temperierung des Behälters durch das Fluid andererseits reduziert werden. Zugleich ist eine gezielte Kühlung beziehungsweise Erwärmung der Lebensmittel jederzeit gewährleistet mit der Folge, dass eine optimale Prozessführung möglich ist und die Qualität der Lebensmittel erhalten bleibt.

Nach einer Weiterbildung der Erfindung können die Lebensmittel in dem Tumbler aufgetaut werden. Zu diesem Zweck kann über den zur Zuführung der Lebensmittel genutzten ersten Durchführungskanal der Drehdurchführung temperierte Luft als weiteres Fluid dem Behälter zugeführt werden. Das weitere Fluid kann dann über die Absaugleitung aus dem Behälter abgeführt werden. In analoger Weise kann das weitere Fluid zur Kühlung der in dem Tumbler bearbeiteten Lebensmittel gekühlt zugeführt werden.

Aus den weiteren Unteransprüchen und der nachfolgenden Beschreibung sind weitere Vorteile, Merkmale und Einzelheiten der Erfindung zu entnehmen. Dort erwähnte Merkmale können jeweils einzeln für sich oder auch in beliebiger Kombination erfindungswesentlich sein. Erfindungsgemäß beschriebene Merkmale und Details des Tumblers gelten selbstverständlich auch im Zusammenhang mit dem erfindungsgemäßen Betriebsverfahren und umgekehrt. So kann auf die Offenbarung zu den einzelnen Erfindungsaspekten stets wechselseitig Bezug genommen werden. Die Zeichnungen dienen dabei lediglich beispielhaft der Erklärung der Erfindung. Sie haben keinen einschränkenden Charakter.

Es zeigen:
- Fig. 1: eine Prinzipdarstellung eines erfindungsgemäßen Tumblers mit einer Drehdurchführung,

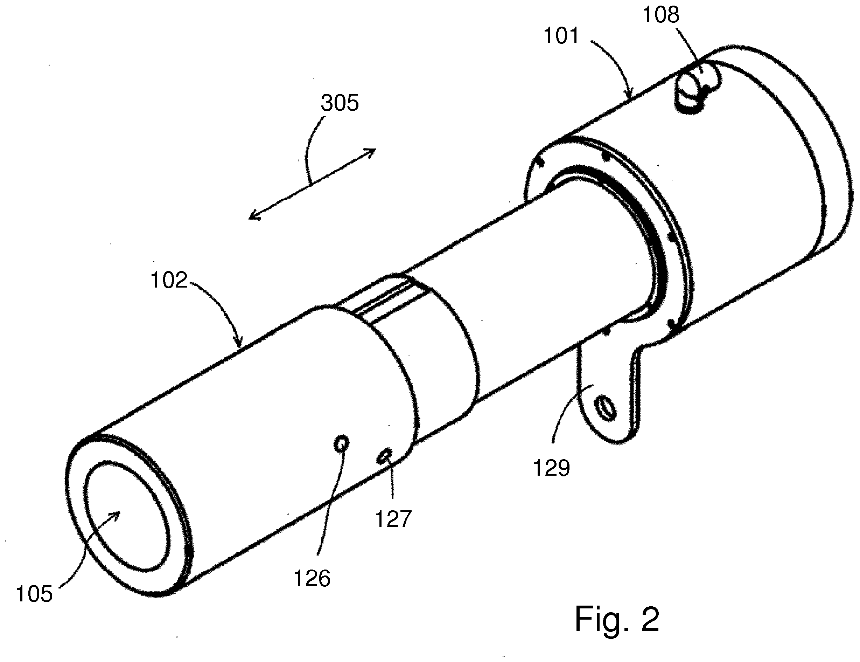

- Fig. 2: eine perspektivische Darstellung der Drehdurchführung mit einem Anschlussmodul und einem Drehmodul,

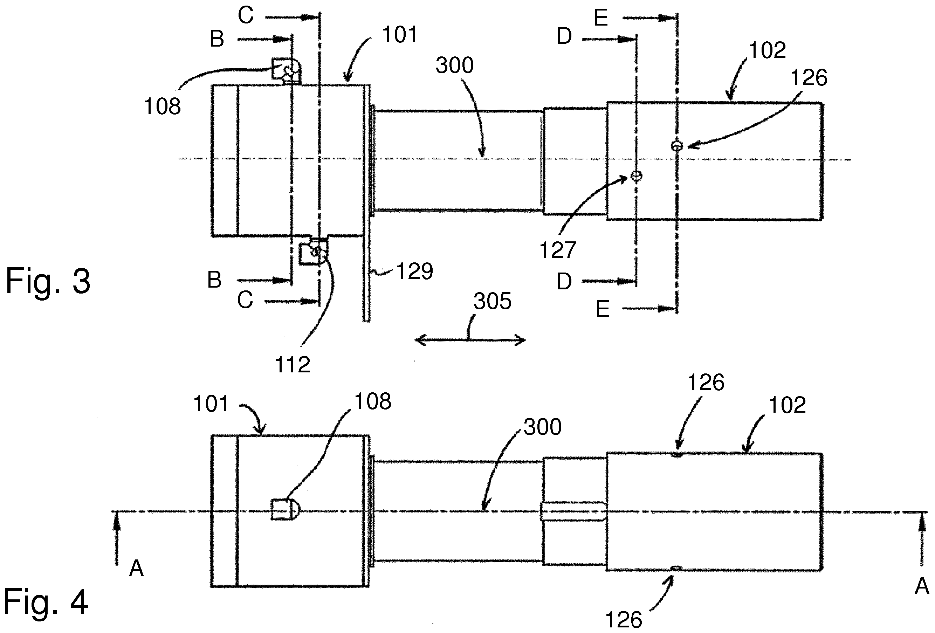

- Fig. 3: eine erste Längsseitenansicht der Drehdurchführung nach Fig. 2,
- Fig. 4: eine zweite Längsseitenansicht der Drehdurchführung nach Fig. 2,

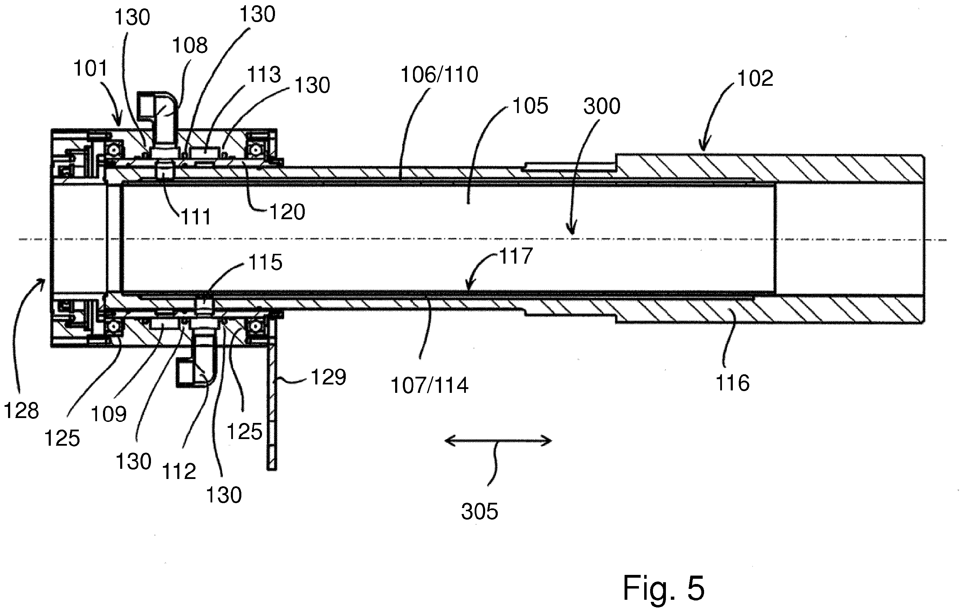

- Fig. 5: einen Längsschnitt A-A durch die Drehdurchführung nach Fig. 4,

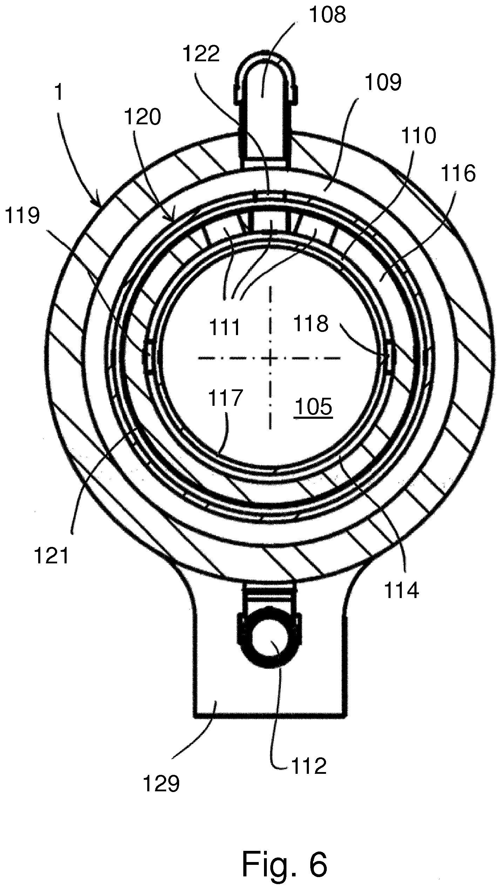

- Fig. 6: einen Querschnitt B-B durch die Drehdurchführung nach Fig. 3,

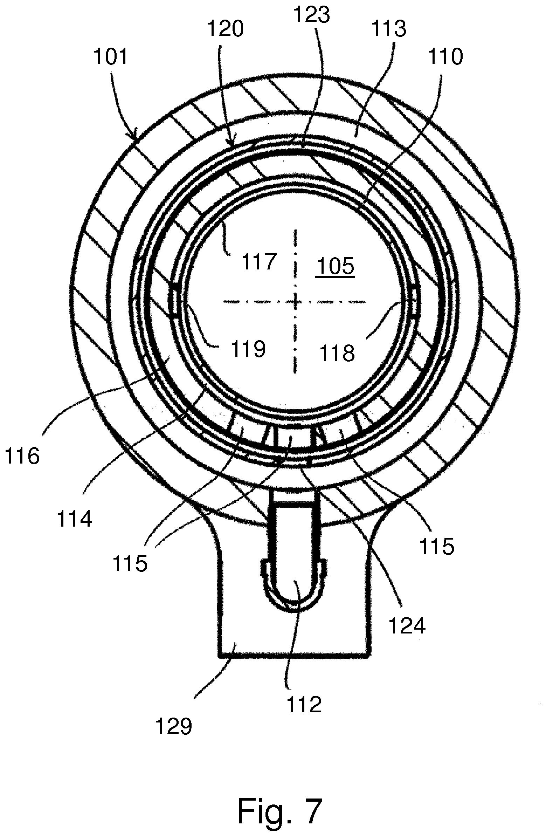

- Fig. 7: einen Querschnitt C-C durch die Drehdurchführung nach Fig. 3,

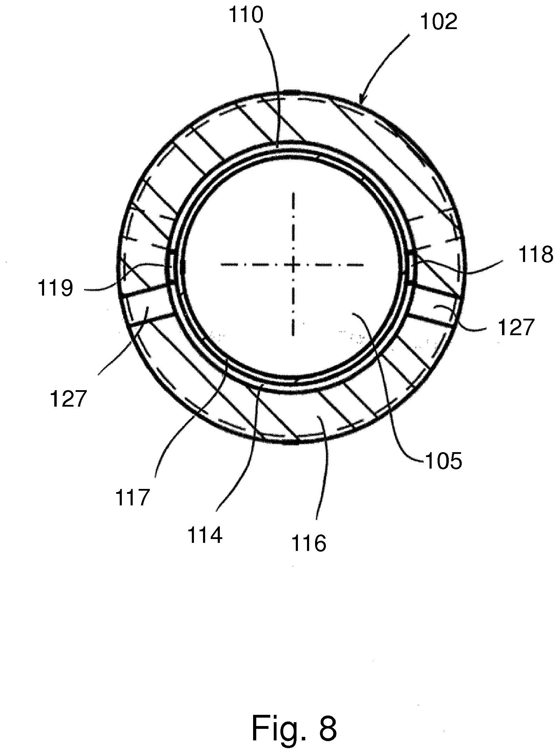

- Fig. 8: einen Querschnitt D-D durch die Drehdurchführung nach Fig. 3 und

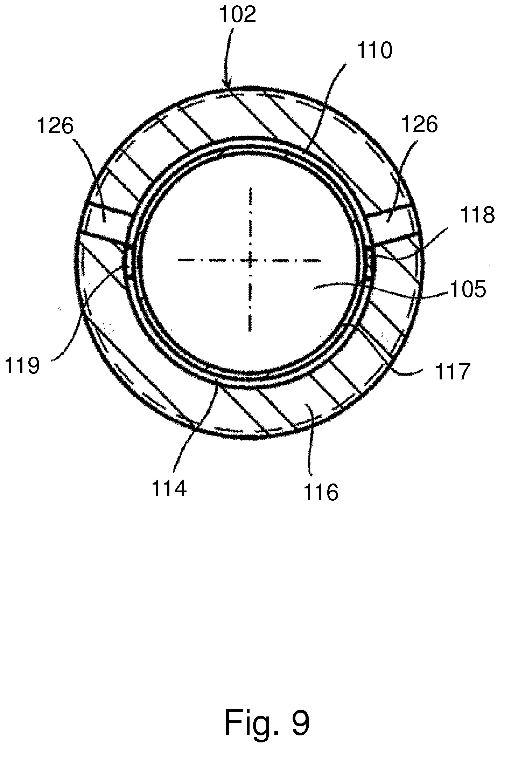

- Fig. 9: einen Querschnitt E-E durch die Drehdurchführung nach Fig. 3.

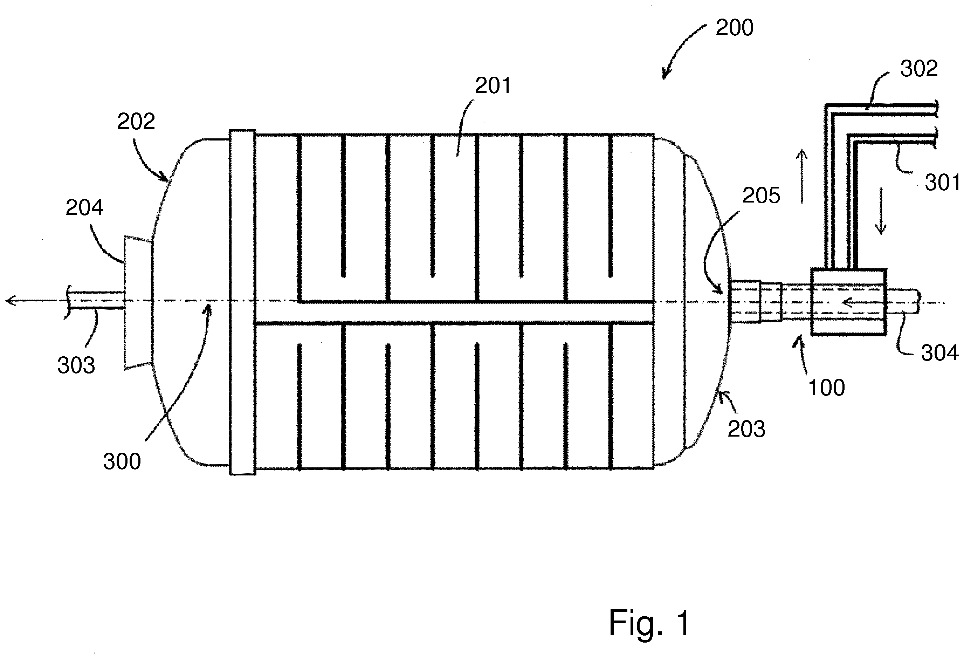

Ein erfindungsgemäßer Tumbler gemäß Fig. 1 umfasst als wesentliche Funktionskomponenten einen Behälter 200, der der Aufnahme und Bearbeitung von Lebensmitteln dient, einen nicht dargestellten Antrieb, der ausgebildet ist zum Rotieren des Behälters 200 um eine Drehachse 300, sowie eine Drehdurchführung 100. Die Drehdurchführung 100 ist an den Behälter 200 des Tumblers angebaut.

Der Behälter 200 sieht zwei einander gegenüberliegende Stirnseiten 202, 203 sowie mantelseitig einen Fluidkanal 201 vor. Durch den Fluidkanal 201 kann ein temperiertes Fluid gefördert werden zum Erwärmen beziehungsweise Kühlen der Lebensmittel während der Bearbeitung. Der Fluidkanal 201 ist Teil eines Doppelmantels des Behälters 201 und mäanderförmig ausgebildet.

An einer ersten Stirnseite 202 des Behälters 200 ist eine nicht dargestellte Entnahmeöffnung für die Lebensmittel vorgesehen. Der Entnahmeöffnung ist eine Entnahmetür 204 zugeordnet zum wahlweisen Freigeben oder Verschließen der Entnahmeöffnung. Zusätzlich ist an der Entnahmetür 204 eine Absaugöffnung vorgesehen. An die Absaugöffnung ist eine Absaugleitung 303 angeschlossen. Über die Absaugleitung 303 und eine nicht dargestellte Pumpe kann Luft aus dem Behälter 200 des Tumblers abgepumpt werden.

An einer der ersten Stirnseite 202 gegenüberliegenden zweiten Stirnseite 203 ist eine Zuführöffnung 205 vorgesehen. Durch die Zuführöffnung 205 werden die Lebensmittel in den Tumbler eingeführt.

Der Zuführöffnung 205 des Behälters 200 ist die Drehdurchführung 100 zugeordnet. Die Drehdurchführung 100 umfasst als wesentliche Baukomponenten ein Anschlussmodul 101 und ein Drehmodul 102. Das Drehmodul 102 wird von dem Anschlussmodul 101 mantelseitig abschnittsweise umgriffen. Das Drehmodul 102 ist um die Drehachse 300 drehbar gehalten. Es sieht einen als Drehteil hergestellten Rotationskörper 116 mit einer Längsausnehmung und eine in die Längsausnehmung des Rotationskörpers 116 eingesetzte Hülse 117 vor. Der Rotationskörper 116 und die Hülse 117 sind drehfest miteinander verbunden.

An der erfindungsgemäßen Drehdurchführung 100 ist koaxial zur Drehachse 300 im Bereich der Längsausnehmung ein erster Durchführungskanal 105 für die Lebensmittel gebildet. Die Lebensmittel gelangen über eine Durchtrittsöffnung 128 in den ersten Durchführungskanal 105. Im Bereich des Drehmoduls 102 ist der erste Durchführungskanal 105 mantelseitig zum einen durch die Hülse 117 und im Weiteren durch den Rotationskörper 116 begrenzt.

Zusätzlich zu dem ersten Durchführungskanal 105 sind an der erfindungsgemäßen Drehdurchführung 100 ein zweiter Durchführungskanal 106 als Zulauf für das in dem Fluidkanal 201 des Behälter 200 geführte Fluid sowie ein dritter Durchführungskanal 107 als Rücklauf für das Fluid vorgesehen. Der zweite Durchführungskanal 106 sieht eine an dem Anschlussmodul 101 vorgesehene Zulauföffnung 108, einen Ringspalt 109 sowie einen in eine durch die Drehachse 300 definierte Axialrichtung 305 langgestreckten Zuleitungsabschnitt 110 für das Fluid vor. Zwischen dem Ringspalt 9 und dem Zuleitungsabschnitt 110 ist eine Verbindungsöffnung 111 für das Fluid vorgesehen. Der dritte Durchführungskanal 107 ist analog aufgebaut. Er umfasst eine Abflussöffnung 112 für das Fluid, einen Ringspalt 113 sowie einen in die Axialrichtung 305 langgestreckten Ableitungsabschnitt 114 und eine zwischen dem Ringspalt 113 und dem Ableitungsabschnitt 114 vorgesehene Verbindungsöffnung 115 für das Fluid.

Zwischen dem Anschlussmodul 101 und dem Drehmodul 102 ist des Weiteren ein Zwischenkörper 120 vorgesehen. Der Zwischenkörper 120 ist drehfest an dem Rotationskörper 116 des Drehmoduls 102 gehalten. An dem Zwischenkörper 120 sind als Teil des zweiten Durchführungskanals 106 ein erster weiterer Ringspalt 121 und eine weitere Verbindungsöffnung 122 für das Fluid vorgesehen. Zusätzlich sieht der Zwischenkörper 120 einen zweiten weiteren Ringspalt 123 und eine zweite weitere Verbindungsöffnung 124 als Teil des dritten Durchführungskanals 107 für das Fluid vor.

Das Anschlussmodul 101 ist über zwei Wälzlager 125 gegen den Zwischenkörper 120 abgestützt. Zusätzlich sind zum Dichten der Durchführungskanäle 105, 106, 107 Wellendichtringe 130 zwischen dem Anschlussmodul 101 und dem hierzu um die Drehachse 300 drehbaren Zwischenkörper 120 vorgesehen.

Das Anschlussmodul 101 ist über einen Haltearm 129 gegen Verdrehung gesichert.

Während die Lebensmittel über die Durchtrittsöffnung 128 in den ersten Durchführungskanal 105 und von dort in den Behälter 200 des Tumblers gelangen, dienen der zweiten Durchführungskanal 106 und der dritte Durchführungskanal 107 als Zulauf und Rücklauf für das Fluid. Das Fluid gelangt insofern über eine Fluidzuleitung 301 und die Zulauföffnung 108 des zweiten Durchführungskanals 106 in den Ringspalt 109 und von dort über die erste weitere Verbindungsöffnung 122 in den ersten weiteren Ringspalt 121 des Zwischenkörpers 120. Aus dem ersten weiteren Ringspalt 121 strömt das Fluid durch die Verbindungsöffnung 111 in den Zuleitungsabschnitt 110 des zweiten Durchführungskanals 106. Aus dem zweiten Durchführungskanal 106 gelangt das Fluid über zwei erste Anschlussöffnungen 126 in den Fluidkanal 201, der im Bereich eines Doppelmantels des Behälters 200 vorgesehen ist.

Aus dem Fluidkanal 201 strömt das Fluid über zwei zweite Anschlussöffnungen 127 in den Ableitungsabschnitt 114 des dritten Durchführungskanals 107 und von dort weiter über die Verbindungsöffnung 115 in den zweiten weiteren Ringspalt 123 des Zwischenkörpers 120. Von dem zweiten weiteren Ringspalt 23 strömt das Fluid über die zweite weitere Verbindungsöffnung 24 in den Ringspalt 13 des dritten Durchführungskanals 107. Aus dem Ringspalt 13 fließt das Fluid über die Abflussöffnung 12 und eine Fluidableitung 302 zurück.

Der Zuleitungsabschnitt 110 des zweiten Durchführungskanals 106 und der Ableitungsabschnitt 114 des dritten Durchführungskanals 107 sind ringsegmentförmig beziehungsweise halbschalenförmig gebildet. Sie umgreifen den ersten Durchführungskanal 105 mantelseitig. Zwischen dem zweiten Durchführungskanal 106 und dem dritten Durchführungskanal 107 sind zwei Stege 118, 119 vorgesehen. Die Stege 118, 119 trennen den zweiten Durchführungskanal 106 und den dritten Durchführungskanal 107 voneinander. Die Stege 118, 119 erstrecken sich zwischen einem Außenmantel der Hülse 117 und einem Innenmantel des Rotationskörpers 116 des Drehmoduls 102.

Die Hülse 117, die als Teil des Drehmoduls 102 ausgeführt ist, begrenzt mit einem Innenmantel derselben den ersten Durchführungskanal 105 und außenmantelseitig den zweiten Durchführungskanal 106 sowie den dritten Durchführungskanal 107. Der Rotationskörper 116 begrenzt innenmantelseitig den ersten Durchführungskanal 105, den zweiten Durchführungskanal 106 sowie den dritten Durchführungskanal 107.

Zum Betrieb des erfindungsgemäßen Tumblers werden die Lebensmittel dem Behälter 200 zugeführt, indem die Luft aus dem Behälter 200 über die Absaugleitung 303 insbesondere mittels der nicht dargestellten Pumpe abgepumpt werden und infolge dessen Lebensmittel aus einem nicht dargestellten Vorratsbehältnis über die Ansaugleitung 304 in den Behälter 200 eingesaugt werden. Während der Behälter 200 auf diese Weise mit den Lebensmitteln befüllt wird, kann der Behälter 200 um die Drehachse 300 rotieren. Zugleich kann das Fluid über die Fluidzuleitung 301, die Fluidableitung 302 sowie den zweiten und dritten Durchführungskanal 106, 107, die an der Drehdurchführung 100 gebildet sind, durch den Fluidkanal 201 des Behälters 200 gepumpt werden.

Eine Entleerung des Behälters 200 erfolgt über die Entnahmeöffnung. Es wird insofern die Entnahmetür 204 geöffnet und der Behälter 200 um die Drehachse 300 rotiert. Beispielsweise kann der Behälter 200 bei der Entnahme zusätzlich geneigt werden. Insbesondere können in dem Behälter 200 Förderkomponenten, beispielsweise schneckenförmig geformte Bleche von einer Behälterinnenwandung nach innen abragen zum Abfördern der Lebensmittel. Während die Lebensmittel aus dem Behälter 200 entnommen werden, kann der Fluidkanal 201 von dem Fluid unverändert durchströmt werden.

Nach einer alternativen Ausführungsform des erfindungsgemäßen Betriebsverfahrens kann vorgesehen sein, dass die Befüllung des Behälters 200 im Stillstand erfolgt und/oder dass der Fluidkanal 201 während der Befüllung des Behälters 200 beziehungsweise bei der Entnahme der Lebensmittel aus dem Behälter 200 von dem Fluid nicht durchströmt wird.

Optional kann vorgesehen sein, dass insbesondere erwärmte beziehungsweise gekühlte Luft als weiteres Fluid den Behälter 200 über den ersten Durchführungskanal 105 zugeführt wird. Es kann insofern eine besonders effektive Kühlung beziehungsweise Erwärmung der in dem Behälter 200 vorgesehenen Lebensmittel während der Bearbeitung erfolgen. Das weitere Fluid wird beispielsweise über die Absaugleitung 303 aus dem Behälter 200 abgeführt.

## Patentansprüche

1. Tumbler für Lebensmittel mit einem zur Aufnahme der Lebensmittel ausgebildeten Behälter (200) umfassend einen mantelseitig vorgesehenen Fluidkanal (201) für ein Fluid, umfassend eine an einer ersten Stirnseite (202) vorgesehene Entnahmeöffnung für die Lebensmittel, umfassend eine an einer der ersten Stirnseite (202) gegenüberliegenden zweiten Stirnseite (203) vorgesehene Zuführöffnung (205) für die Lebensmittel und umfassend eine Absaugöffnung für ein in dem Behälter (200) vorgesehenes Gas, mit einem Antrieb zum Rotieren des Behälters um eine Drehachse (300) und mit einer der zweiten Stirnseite (203) zugeordneten Drehdurchführung (100),
- wobei die Drehdurchführung (100) ein Anschlussmodul (101) und ein drehbar zu dem Anschlussmodul (101) vorgesehenes Drehmodul (102), welches mit dem Behälter (200) um die Drehachse (300) rotierbar ist, umfasst,
- wobei ein zu der Zuführöffnung (205) geführter erster Durchführungskanal (105) für die Lebensmittel koaxial zu der Drehachse (300) vorgesehen ist,
- wobei ein zweiter Durchführungskanal (106) und ein dritter Durchführungskanal (107) als ein Vorlauf und ein Rücklauf für das Fluid vorgesehen sind,
- wobei der zweite Durchführungskanal (106) eine an dem Anschlussmodul (101) vorgesehene Zulauföffnung (108) für das Fluid, einen zwischen dem Anschlussmodul (101) und dem Drehmodul (102) gebildeten Ringspalt (109), einen an dem Drehmodul (102) gebildeten Zuleitungsabschnitt (110) sowie eine zwischen dem Ringspalt (109) und dem Zuleitungsabschnitt (110) gebildete Verbindungsöffnung (111) aufweist und
- wobei der dritte Durchführungskanal (107) eine an dem Anschlussmodul (101) vorgesehene Abflussöffnung (112) für das Fluid, einen zwischen dem Anschlussmodul (101) und dem Drehmodul (102) gebildeten Ringspalt (113), einen an dem Drehmodul (102) gebildeten Ableitungsabschnitt (114) sowie eine zwischen dem Ringspalt (113) und dem Ableitungsabschnitt (114) gebildete Verbindungsöffnung (115) aufweist,
und
- wobei die Drehdurchführung (100) Dichtungen (130) zum Dichten der Durchführungskanäle (105, 106, 107) gegeneinander umfasst.

2. Tumbler nach Anspruch 1, **dadurch gekennzeichnet, dass** der Zuleitungsabschnitt (110) des zweiten Durchführungskanals (106) und/oder der Ableitungsabschnitt (114) des dritten Durchführungskanals (107) halbschalenartig und/oder ringsegmentförmig gebildet sind und/oder in eine durch die Drehachse (300) definierte Axialrichtung (305) langgestreckt ausgebildet sind.

3. Tumbler nach Anspruch 1 oder 2, **dadurch gekennzeichnet, dass** der Zuleitungsabschnitt (110) des zweiten Durchführungskanals (106) und/oder der Ableitungsabschnitt (114) des dritten Durchführungskanals (107) den ersten Durchführungskanal (105) mantelseitig jedenfalls abschnittsweise umgreifen.

4. Tumbler nach einem der Ansprüche 1 bis 3, **dadurch gekennzeichnet, dass** das Anschlussmodul (101) das Drehmodul (102) mantelseitig umgreift.

5. Tumbler nach einem der Ansprüche 1 bis 4, **dadurch gekennzeichnet, dass** das Drehmodul (102) einen als Drehteil hergestellten Rotationskörper (116) und eine in dem Rotationskörper (116) eingesetzte Hülse (117) umfasst, wobei der Zuleitungsabschnitt (110) des zweiten Durchführungskanals (106) und/oder der Ableitungsabschnitt (114) des dritten Durchführungskanals (107) zwischen dem Rotationskörper (116) und der Hülse (117) gebildet sind und wobei der Zuleitungsabschnitt (110) des zweiten Durchführungskanals (106) und der Ableitungsabschnitt (114) des dritten Durchführungskanals (107) durch einen zwischen der Hülse (117) und dem Rotationskörper (116) vorgesehenen Steg (118, 119) voneinander getrennt sind, der bevorzugt in die Axialrichtung (305) erstreckt ist.

6. Tumbler nach einem der Ansprüche 1 bis 5, **dadurch gekennzeichnet, dass** die Verbindungsöffnungen (111, 115) des zweiten Durchführungskanals (106) und des dritten Durchführungskanals (107) als Teil des Drehmoduls (102) und bevorzugt an dem Rotationskörper (116) gebildet sind.

7. Tumbler nach einem der Ansprüche 1 bis 6, **dadurch gekennzeichnet, dass** ein mit dem Drehmodul (102) drehfest verbundener Zwischenkörper (120) vorgesehen ist, welcher das Drehmodul (102) im Bereich der Ringspalte (109, 113) des zweiten Durchführungskanals (106) und des dritten Durchführungskanals (107) mantelseitig umgreift, wobei an dem Zwischenkörper (120) ein erster weiterer Ringspalt (121) und eine erste weitere Verbindungsöffnung (122) als Teil des zweiten Durchführungskanals (106) sowie ein zweiter weiterer Ringspalt (123) und eine zweite weitere Verbindungsöffnung (124) als Teil des dritten Durchführungskanals (107) für das Fluid gebildet sind.

8. Tumbler nach Anspruch 7, **dadurch gekennzeichnet, dass** das Anschlussmodul (101) über Drehlager und bevorzugt über Wälzlager (125) gegen den Zwischenkörper (120) abgestützt ist.

9. Tumbler nach Anspruch 7 oder 8, **dadurch gekennzeichnet, dass** zum Dichten der Durchführungskanäle (105, 106, 107) gegeneinander vorgesehene Dichtungen als Wellendichtungen (130) vorgesehen sind, wobei die Wellendichtungen (130) zwischen dem Anschlussmodul (101) und dem Zwischenkörper (120) angeordnet sind.

10. Tumbler nach einem der Ansprüche 1 bis 9, **dadurch gekennzeichnet, dass** der zweite Durchführungskanal (106) eine dem Zuleitungsabschnitt (110) zugeordnete und mit dem Fluidkanal (201) des Behälters (200) verbundene erste Anschlussöffnung (126) für das Fluid aufweist und/oder dass der dritte Durchführungskanal (107) eine dem Ableitungsabschnitt (114) zugeordnete und mit dem Fluidkanal (201) des Behälters (200) verbundene zweite Anschlussöffnung (127) für das Fluid vorsieht.

11. Betriebsverfahren für einen Tumbler nach einem der Ansprüche 1 bis 10 mit einem um eine zur Vertikalen geneigten Drehachse (300) rotierbaren Behälter (200) umfassend die folgenden Verfahrensschritte:
- aus dem zur Aufnahme und Bearbeitung von Lebensmitteln ausgebildeten Behälter (200) des Tumblers wird über eine Absaugleitung (303), die zu einer Absaugöffnung des Behälters (200) geführt ist, Gas und bevorzugt Luft aus dem Behälter (200) abgesaugt;
- infolge der Gasabsaugung werden die Lebensmittel über eine Ansaugleitung (304) und einen an einer Drehdurchführung (100) des Tumblers gebildeten ersten Durchführungskanal (105) in den Behälter (200) eingesaugt;
- durch einen an der Drehdurchführung (100) gebildeten zweiten Durchführungskanal (106) wird ein Fluid in einen mantelseitig an dem Behälter (200) vorgesehenen Fluidkanal (201) eingeführt;
- durch einen an der Drehdurchführung (100) gebildeten dritten Durchführungskanal (107) wird das Fluid aus dem mantelseitig an dem Behälter (200) vorgesehenen Fluidkanal (201) abgeführt;
- die Lebensmittel werden durch eine an einer ersten Stirnseite (202) des Behälters (200) vorgesehene Entnahmeöffnung aus dem Behälter (200) entnommen, wobei die Drehdurchführung (100) mit den Durchführungskanälen (105, 106, 107) an einer der ersten Stirnseite (202) gegenüberliegenden zweiten Stirnseite (203) vorgesehen ist.

12. Betriebsverfahren nach Anspruch 11, **dadurch gekennzeichnet, dass** das Fluid durch den zweiten Durchführungskanal (106) zu dem Fluidkanal (201) des Behälters (200) geführt wird, während der Behälter (200) um die Drehachse (300) rotiert.

13. Betriebsverfahren nach Anspruch 11 oder 12, **dadurch gekennzeichnet, dass** das Fluid durch den dritten Durchführungskanal (107) aus dem Fluidkanal (201) des Behälters (200) abgeführt wird, während der Behälter (200) um die Drehachse (300) rotiert.

14. Betriebsverfahren nach einem der Ansprüche 11 bis 13, **dadurch gekennzeichnet, dass** die Lebensmittel in den Behälter (200) eingefüllt und/oder aus dem Behälter (200) entnommen werden, während der Behälter (200) um die Drehachse (300) rotiert.

15. Betriebsverfahren nach einem der Ansprüche 11 bis 14, **dadurch gekennzeichnet, dass** über den ersten Durchführungskanal (105) der Drehdurchführung (100) temperierte Luft als ein weiteres Fluid dem Behälter (200) zugeführt wird, um die in dem Behälter (200) vorgesehenen Lebensmittel zu erwärmen und/oder zu kühlen und/oder aufzutauen, und/oder dass das weitere Fluid über die Absaugöffnung aus dem Behälter (200) abgeführt wird.

## Claims

1. Tumbler for food having a container (200) that is formed so as to receive the food, said container comprising a fluid duct (201) that is provided on the shell-side for a fluid, said container comprising an extraction opening for the food and said extraction opening is provided on a first end side (202), said container comprising a supply opening (205) for the food and said supply opening is provided on a second end side (203) that lies opposite the first end side (202) and said container comprising a suction opening for a gas that is provided in the container (200) and said tumbler has a drive for rotating the container about an axis of rotation (300) and has a rotary feedthrough (100) that is allocated to the second end side (203),
- wherein the rotary feedthrough (100) comprises a connection module (101) and a rotary module (102) that is provided in a rotatable manner with respect to the connection module (101) and said rotary module can rotate with the container (200) about the axis of rotation (300),
- wherein a first feedthrough duct (105) which is guided to the supply opening (205), is provided for the food in a coaxial manner with respect to the axis of rotation (300),
- wherein a second feedthrough duct (106) and a third feedthrough duct (107) are provided as a flow and a return flow for the fluid,
- wherein the second feedthrough duct (106) comprises an intake opening (108) for the fluid and said intake opening is provided on the connection module (101), an annular gap (109) that is formed between the connection module (101) and the rotary module (102), a feed line section (110) that is formed on the rotary module (102), and also a connecting opening (111) that is formed between the annular gap (109) and the feed line section (110) and
- wherein the third feedthrough duct (107) comprises a discharge opening (112) for the fluid and said discharge opening is provided on the connection module (101), an annular gap (113) that is formed between the connection module (101) and the rotary module (102), an outlet section (114) that is formed on the rotary module (102), and also a connecting opening (115) that is formed between the annular gap (113) and the outlet section (114), and
- wherein the rotary feedthrough (100) comprises seals (130) for sealing the feedthrough ducts (105, 106, 107) with respect to one another.

2. Tumbler according to claim 1, **characterised in that** the feed line section (110) of the second feedthrough duct (106) and/or the outlet section (114) of the third feedthrough duct (107) are formed in a half shell manner and/or are formed in an annular segmented manner and/or are formed lengthwise in an axial direction (305) that is defined by means of the axis of rotation (300).

3. Tumbler according to claim 1 or 2, **characterised in that** the feed line section (110) of the second feedthrough duct (106) and/or the outlet section (114) of the third feedthrough duct (107) at least in sections encompass the first feedthrough duct (105) on the shell side.

4. Tumbler according to one of claims 1 to 3, **characterised in that** the connection module (101) encompasses the rotary module (102) on the shell side.

5. Tumbler according to one of claims 1 to 4, **characterised in that** the rotary module (102) comprises a rotation body (116) that is produced as a rotary part, and a sleeve (117) that is inserted in the rotation body (116), wherein the feed line section (110) of the second feedthrough duct (106) and/or the outlet section (114) of the third feedthrough duct (107) are formed between the rotation body (116) and the sleeve (117) and wherein the feed line section (110) of the second feedthrough duct (106) and the outlet section (114) of the third feedthrough duct (107) are separated from one another by means of a connecting piece (118, 119) that is provided between the sleeve (117) and the rotation body (116) and said connecting piece is preferably running in the axial direction (305).

6. Tumbler according to one of claims 1 to 5, **characterised in that** the connecting openings (111, 115) of the second feedthrough duct (106) and of the third feedthrough duct (107) are formed as part of the rotary module (102) and preferably on the rotation body (116).

7. Tumbler according to one of claims 1 to 6, **characterised in that** an intermediate body (120) is provided that is connected in a non-rotatable manner to the rotary module (102) and said intermediate body encompasses the rotary module (102) in the region of the annular gap (109, 113) of the second feedthrough duct (106) and of the third feedthrough duct (107) on the shell side, wherein a first further annular gap (121) and a first further connecting opening (122) are formed on the intermediate body (120) as part of the second feedthrough duct (106) and also a second further annular gap (123) and a second further connecting opening (124) are formed as part of the third feedthrough duct (107) for the fluid.

8. Tumbler according to claim 7, **characterized in that** the connection module (101) is braced via pivot bearings and preferably via roller bearings (125) against the intermediate body (120).

9. Tumbler according to claim 7 or 8, **characterised in that** seals that are provided so as to seal the feedthrough ducts (105, 106, 107) with respect to one another are provided as shaft seals (130), wherein the shaft seals (130) are arranged between the connection module (101) and the intermediate body (120).

10. Tumbler according to one of claims 1 to 9, **characterised in that** the second feedthrough duct (106) comprises a first connection opening (126) for the fluid and said first connection opening is connected to the fluid duct (201) of the container (200) and is allocated to the feed line section (110) and/or **characterised in that** the third feedthrough duct (107) provides a second connection opening (127) for the fluid and said second connection opening is connected to the fluid duct (201) of the container (200) and is allocated to the outlet section (114).

11. Operating method for a tumbler according to one of claims 1 to 10 having a container (200) that can rotate about an axis of rotation (300) that is inclined with respect to vertical, said method comprising the following method steps:
- out of the container (200) of the tumbler, said container being formed so as to receive and process food, gas and preferably air is sucked out of the container (200) via a suction line (303) that is guided to a suction opening of the container (200);
- as a consequence of the gas extraction, the food is sucked into the container (200) via a suction line (304) and a first feedthrough duct (105) that is formed on a rotary feedthrough (100) of the tumbler;
- a fluid is introduced into a fluid duct (201) that is provided on the shell side on the container (200) through a second feedthrough duct (106) that is formed on the rotary feedthrough (100);
- the fluid is discharged from the fluid duct (201) that is provided on the shell side on the container (200) through a third feedthrough duct (107) that is formed on the rotary feedthrough (100);
- the food is extracted from the container (200) through an extraction opening that is provided on a first end side (202) of the container (200), wherein the rotary feedthrough (100) having the feedthrough ducts (105, 106, 107) is provided on an end side (203) that lies opposite the first end side (202).

12. Operating method according to claim 11, **characterised in that** the fluid is guided through the second feedthrough duct (106) to the fluid duct (201) of the container (200) while the container (200) is rotating about the axis of rotation (300).

13. Operating method according to claim 11 or 12, **characterised in that** the fluid is discharged through the third feedthrough duct (107) from the fluid duct (201) of the container (200) while the container (200) is rotating about the axis of rotation (300).

14. Operating method according to one of claims 11 to 13, **characterised in that** the food is filled into the container (200) and/or extracted from the container (200) while the container (200) is rotating about the axis of rotation (300).

15. Operating method according to one of claims 11 to 14, **characterised in that** temperature-controlled air is supplied as a further fluid to the container (200) via the first feedthrough duct (105) of the rotary feedthrough (100) in order to heat and/or to cool and/or to thaw the food that is provided in the container (200), and/or **characterised in that** the further fluid is discharged from the container (200) via the suction opening.

## Revendications

1. Tumbler pour aliments comportant un récipient (200) conçu pour recevoir les aliments, comprenant un canal de fluide (201) prévu côté enveloppe pour un fluide, comprenant une ouverture de prélèvement pour les aliments prévue sur une première face frontale (202), comprenant une ouverture d'alimentation (205) pour les aliments prévue sur une deuxième face frontale (203) opposée à la première face frontale (202) et comprenant une ouverture d'aspiration pour un gaz prévu dans le récipient (200), comportant un entraînement pour faire tourner le récipient autour d'un axe de rotation (300) et comportant un passage tournant (100) associé à la deuxième face frontale (203),
- dans lequel le passage tournant (100) comprend un module de raccordement (101) et un module rotatif (102) prévu de manière à pouvoir tourner par rapport au module de raccordement (101) et pouvant tourner avec le récipient (200) autour de l'axe de rotation (300),
- dans lequel un premier canal de passage (105) pour les aliments, menant à l'ouverture d'alimentation (205), est prévu coaxialement à l'axe de rotation (300),
- dans lequel un deuxième canal de passage (106) et un troisième canal de passage (107) sont prévus comme un aller et un retour pour le fluide,
- dans lequel le deuxième canal de passage (106) présente une ouverture d'arrivée (108) pour le fluide prévue sur le module de raccordement (101), une fente annulaire (109) formée entre le module de raccordement (101) et le module rotatif (102), une partie d'amenée (110) formée sur le module rotatif (102) ainsi qu'une ouverture de liaison (111) formée entre la fente annulaire (109) et la partie d'amenée (110) et
- dans lequel le troisième canal de passage (107) présente une ouverture d'écoulement (112) pour le fluide prévue sur le module de raccordement (101), une fente annulaire (113) formée entre le module de raccordement (101) et le module rotatif (102), une partie d'évacuation (114) formée sur le module rotatif (102) ainsi qu'une ouverture de liaison (115) formée entre la fente annulaire (113) et la partie d'évacuation (114), et
- dans lequel le passage tournant (100) comprend des joints d'étanchéité (130) pour assurer l'étanchéité des canaux de passage (105, 106, 107) les uns par rapport aux autres.

2. Tumbler selon la revendication 1, **caractérisé en ce que** la partie d'amenée (110) du deuxième canal de passage (106) et/ou la partie d'évacuation (114) du troisième canal de passage (107) sont réalisées en forme de demi-coque et/ou de segment annulaire et/ou sont allongées dans une direction axiale (305) définie par l'axe de rotation (300).

3. Tumbler selon la revendication 1 ou 2, **caractérisé en ce que** la partie d'amenée (110) du deuxième canal de passage (106) et/ou la partie d'évacuation (114) du troisième canal de passage (107) entourent au moins sur certaines parties le premier canal de passage (105) côté enveloppe.

4. Tumbler selon l'une des revendications 1 à 3, **caractérisé en ce que** le module de raccordement (101) entoure le module rotatif (102) côté enveloppe.

5. Tumbler selon l'une des revendications 1 à 4, **caractérisé en ce que** le module rotatif (102) comprend un corps de révolution (116) fabriqué sous la forme d'une pièce tournée et un manchon (117) inséré dans le corps de révolution (116), la partie d'amenée (110) du deuxième canal de passage (106) et/ou la partie d'évacuation (114) du troisième canal de passage (107) étant formées entre le corps de révolution (116) et le manchon (117), et la partie d'amenée (110) du deuxième canal de passage (106) et la partie d'évacuation (114) du troisième canal de passage (107) étant séparées l'une de l'autre par une entretoise (118, 119) prévue entre le manchon (117) et le corps de révolution (116), qui s'étend de préférence dans la direction axiale (305).

6. Tumbler selon l'une des revendications 1 à 5, **caractérisé en ce que** les ouvertures de liaison (111, 115) du deuxième canal de passage (106) et du troisième canal de passage (107) sont formées comme faisant partie du module rotatif (102) et de préférence sur le corps de révolution (116).

7. Tumbler selon l'une des revendications 1 à 6, **caractérisé en ce qu'**il est prévu un corps intermédiaire (120) relié de manière solidaire en rotation au module rotatif (102), qui entoure le module rotatif (102) côté enveloppe dans la zone des fentes annulaires (109, 113) du deuxième canal de passage (106) et du troisième canal de passage (107), une première autre fente annulaire (121) et une première autre ouverture de liaison (122) faisant partie du deuxième canal de passage (106) ainsi qu'une deuxième autre fente annulaire (123) et une deuxième autre ouverture de liaison (124) faisant partie du troisième canal de passage (107) pour le fluide étant formées sur le corps intermédiaire (120).

8. Tumbler selon la revendication 7, **caractérisé en ce que** le module de raccordement (101) est soutenu contre le corps intermédiaire (120) par des paliers rotatifs et de préférence par des paliers à roulement (125).

9. Tumbler selon la revendication 7 ou 8, **caractérisé en ce que** des joints d'étanchéité prévus pour assurer l'étanchéité des canaux de passage (105, 106, 107) les uns par rapport aux autres sont prévus sous la forme de garnitures étanches d'arbre (130), les garnitures étanches d'arbre (130) étant disposés entre le module de raccordement (101) et le corps intermédiaire (120).

10. Tumbler selon l'une des revendications 1 à 9, **caractérisé en ce que** le deuxième canal de passage (106) présente une première ouverture de raccordement (126) pour le fluide, associée à la partie d'amenée (110) et reliée au canal de fluide (201) du récipient (200) et/ou **en ce que** le troisième canal de passage (107) présente une deuxième ouverture de raccordement (127) pour le fluide, associée à la partie d'évacuation (114) et reliée au canal de fluide (201) du récipient (200).

11. Procédé de fonctionnement d'un tumbler selon l'une des revendications 1 à 10, comportant un récipient (200) pouvant tourner autour d'un axe de rotation (300) incliné par rapport à la verticale, comprenant les étapes de procédé suivantes :
- du gaz et de préférence de l'air sont aspirés hors du récipient (200) du tumbler, conçu pour recevoir et traiter des aliments, via une conduite d'aspiration (303) qui mène à une ouverture d'aspiration du récipient (200) ;
- suite à l'aspiration de gaz, les aliments sont aspirés dans le récipient (200) via une conduite d'aspiration (304) et un premier canal de passage (105) formé sur un passage tournant (100) du tumbler ;
- un fluide est introduit dans un canal de fluide (201) prévu côté enveloppe sur le récipient (200) par un deuxième canal de passage (106) formé sur le passage tournant (100) ;
- le fluide est évacué du canal de fluide (201) prévu côté enveloppe sur le récipient (200) par un troisième canal de passage (107) formé sur le passage tournant (100) ;
- les aliments sont prélevés du récipient (200) par une ouverture de prélèvement prévue sur une première face frontale (202) du récipient (200), le passage tournant (100) avec les canaux de passage (105, 106, 107) étant prévu sur une deuxième face frontale (203) opposée à la première face frontale (202).

12. Procédé de fonctionnement selon la revendication 11, **caractérisé en ce que** le fluide est guidé à travers le deuxième canal de passage (106) vers le canal de fluide (201) du récipient (200) pendant que le récipient (200) tourne autour de l'axe de rotation (300).

13. Procédé de fonctionnement selon la revendication 11 ou 12, **caractérisé en ce que** le fluide est évacué du canal de fluide (201) du récipient (200) par le troisième canal de passage (107) pendant que le récipient (200) tourne autour de l'axe de rotation (300).

14. Procédé de fonctionnement selon l'une des revendications 11 à 13, **caractérisé en ce que** les aliments sont introduits dans le récipient (200) et/ou prélevés du récipient (200) pendant que le récipient (200) tourne autour de l'axe de rotation (300).

15. Procédé de fonctionnement selon l'une des revendications 11 à 14, **caractérisé en ce que** de l'air mis à température est amené au récipient (200) en tant qu'autre fluide via le premier canal de passage (105) du passage tournant (100) pour chauffer et/ou refroidir et/ou décongeler les aliments prévus dans le récipient (200), et/ou **en ce que** l'autre fluide est évacué du récipient (200) via l'ouverture d'aspiration.
